(19) Europäisches Patentamt

European Patent Office

Office européen des brevets

(11) Publication number : **0 505 086 A2**

# (12) EUROPEAN PATENT APPLICATION

(21) Application number : **92302109.1**

(22) Date of filing : **12.03.92**

(51) Int. Cl.⁵ : **C09C 3/06,** C09C 1/00,
C09D 5/08

(30) Priority : **19.03.91 GB 9105762**

(43) Date of publication of application :
**23.09.92 Bulletin 92/39**

(84) Designated Contracting States :
**AT BE CH DE DK FR GB IT LI NL SE**

(71) Applicant : **Cookson Laminox Limited
Millhill, North West Industrial Estate
Peterlee, County Durham SR8 2HR (GB)**

(72) Inventor : **Carthey, Nicholas Andrew
2 Honor Close
Kidlington, Oxon OX5 2XL (GB)**
Inventor : **White, Keith William Peter
2 Honor Close
Kidlington, Oxon OX5 2XL (GB)**

(74) Representative : **Allard, Susan Joyce et al
BOULT, WADE & TENNANT, 27 Furnival Street
London EC4A 1PQ (GB)**

(54) Method for the treatment of lamellar or plate-like materials.

(57) A method for the treatment of a lamellar or flaky pigment or extender which comprises forming a zinc phosphate coating on the surface of the particles of the material by the steps of
a) coating the particles of the material with zinc oxide or zinc hydroxide by contacting the material with a solution of a zinc salt in sodium or potassium hydroxide, the solution having a pH of 11 or above, at a temperature in the range of from 50° to 100°C, whereby a deposit of zinc oxide or zinc hydroxide is formed on the surface of the particles ; and
b) converting the zinc oxide or zinc hydroxide to zinc phosphate by treatment of the zinc oxide or zinc hydroxide coated material with an acidic phosphate solution, or phosphoric acid.

EP 0 505 086 A2

The present invention relates to a method for the treatment of lamellar or flaky materials and, in particular, to a method for the preparation of a synthetic micaceous iron oxide product which has an improved performance in relation to its corrosion inhibition properties.

Micaceous iron oxide (MIO) consists of $Fe_2O_3$ with a flake-like particle structure. It is employed as a pigment for protective paints in a range of binders e.g. alkyds, vinyls, epoxies and urethanes. Micaceous iron oxide paints are used to protect many types of steel structures including bridges, storage tanks, electricity-pylons and railway gantries.

The protective action (known as the barrier effect) is due to the alignment of pigment platelets within the paint film, forming tightly packed layers lying roughly parallel to the substrate. The overlapping particles, encapsulated in binder solids, act as a barrier against permeation of corrosive ions and shield the binder from UV degradation.

Since the early 1900s, micaceous iron oxide pigment has been obtained from iron ore deposits located in various parts of the world. The chemical and physical characteristics, as with other natural mineral oxides, depend very much on the constitution of the source material and from where it is obtained. Variations in the morphology of natural micaceous iron oxide pigments, (ranging from lamellar to granular) affect the protective properties considerably. Therefore great care is needed in selecting pigments of suitable quality for long-term durability.

Synthetic micaceous iron oxide may be made by, for example, a series of chemical reactions which involve a first stage chlorination of metallic iron to produce ferric chloride, a second stage complexation of the ferric chloride with sodium chloride to form $NaFeCl_4$, and a third stage oxidation of this complex to form lamellar iron oxide.

A synthetic micaceous iron oxide having a particle size in the range of from 5 to 75 micrometres, with a 3 to 4% retention on a 63 micrometre sieve is known as LAMINOX-S. A synthetic micaceous iron oxide having a particle size range below 20 micrometres, and a lamellar thickness of 2 to 4 micrometres is known as LAMINOX-F. (LAMINOX is a Registered Trade).

DE-A-1288714 discloses zinc phosphate coated chrome yellow prepared by a method in which a suspension of zinc oxide at ambient temperature is gradually transformed into zinc phosphate by the addition of phosphoric acid to pH7.

GB-A-1578357 discloses zinc phosphate coated chromium dioxide particles which are prepared by precipitating zinc hydroxide onto dispersed chromium dioxide particles by adding to the dispersion a water-soluble zinc salt and an alkaline hydroxide or ammonia in an amount such that the pH is from 5 to 7, treating the coated particles with phosphoric acid, and thereafter thermally treating the product at a temperature of from 100° to 350°C.

We have now developed a method for the treatment of lamellar or flaky pigments or extenders which serves to enhance their anti-corrosive action by providing a thin layer of zinc phosphate on the surface of the particles of the material, thus combining both barrier and chemically inhibitive properties.

Accordingly the present invention provides a method for the treatment of a lamellar or flaky pigment or extender which comprises forming a zinc phosphate coating on the surface of the particles of the material by the steps of

a) coating the particles of the material with zinc oxide or zinc hydroxide by contacting the material with a solution of a zinc salt in sodium or potassium hydroxide, the solution having a pH of 11 or above, at a temperature in the range of from 50° to 100°C, whereby a deposit of zinc oxide or zinc hydroxide is formed on the surface of the particles; and

b) converting the zinc oxide or zinc hydroxide to zinc phosphate by treatment of the zinc oxide or zinc hydroxide coated material with an acidic phosphate solution, or phosphoric acid.

Examples of materials which may be treated in accordance with the invention are natural or synthetic micaceous iron oxide, or the lamellar forms of alumina, alumina hydrate, zinc oxide, aluminium silicate (mica), magnesium silicate (talc), sodium silicate, magnesium alumina silicate, huntite ($Mg_3Ca(CO_3)_4$), hydromagnesite ($Mg_4(CO_3)(OH)_2.3H_2O$), or the flaky forms of alumina, zinc and glass. Natural or synthetic micaceous iron oxide are the preferred materials for treatment in accordance with the invention.

In carrying out the method of the invention the treatment in step (a) is effected by contacting the material with an alkaline solution of zinc carbonate, zinc sulphate or zinc phosphate, with zinc phosphate being particularly preferred. The pH of the solution is 11 or above, more preferably 13 or above. The morphology of the zinc oxide or zinc hydroxide deposit is influenced by the particular salt which is used. The alkaline solution comprises a solution of the chosen zinc salt in sodium or potassium hydroxide. The concentration of the sodium or potassium hydroxide will preferably be about 1M, but any concentration capable of dissolving a significant amount of the zinc salt may be used. The maximum zinc concentration corresponds to a saturated solution of the zinc salt.

The alkaline solution of the zinc salt is preferably contacted at ambient temperature with the lamellar or flaky pigment or extender and the temperature of the solution raised to a temperature in the range of 50° to 100°C, preferably to a temperature of about 75°C. Alternatively, the lamellar or flaky pigment or extender may be added to an alkaline solution of the zinc salt which is maintained at a temperature in the range of 50° to 100°C. A deposit of zinc oxide or zinc hydroxide is gradually formed on the surface of the material. Treatment is generally complete after about 30 minutes. The product from this stage is filtered and may, if desired, be washed and dried prior to further treatment in step (b). The filtered product is, however, preferably kept moist as the particles may adhere and form a hard mass on drying.

The temperatures specified are necessary in order to decompose the hydroxy-zincate complex which is formed at ambient temperature in solution and precipitate zinc (hydr)oxide, for example:

$$Zn_3(PO_4)_2 + 12NaOH \rightarrow 3Zn(OH)_4{}^{2-} + 2PO_4{}^{3-} + 12Na^+$$

$$Zn(OH)_4{}^{2-} \xrightarrow{\text{heat}} Zn(OH)_2 + 2OH^-$$

In step (b) of the present invention the zinc oxide or zinc hydroxide layer is transformed into zinc phosphate tetrahydrate either partially or completely, as desired. In carrying out stage (b) the material coated with zinc oxide or zinc hydroxide is contacted with an acidic phosphate solution at ambient temperature. The pH of the solution is generally maintained above pH 3. The phosphate solution may be a solution of sodium dihydrogen phosphate, or another alkali metal hydrogen phosphate, or a mixture of the salt with phosphoric acid, or phosphoric acid, or a solution of zinc phosphate in phosphoric acid. The reaction in this stage is complete after about 30 minutes and the product coated with zinc phosphate tetrahydrate is filtered, washed and dried to provide the desired material with a coating of zinc phosphate dihydrate.

Alternatively, the product from step (a) may be slurried with water and the acidic phosphate solution added dropwise thereto so that the zinc oxide or zinc hydroxide is neutralised, the reaction being complete when the pH of the solution reaches pH 7.

A pretreatment step prior to step (a) of the process may be desirable in order to provide sites on the particles of the lamellar or flaky material for the zinc phosphate to bind to, or to key, or roughen the surface of the particles. The pretreatment step will depend upon the material which is to be treated. Micaceous iron oxide may be treated with phosphoric acid in order to form an iron phosphate layer on the surface, whilst glass would generally require a pretreatment with sodium hydroxide or hydrofluoric acid. Alternatively, micaceous iron oxide may be treated in accordance with the method as described in our co-pending Application No. (BWT Reference 36303/100) to form an iron phosphate layer on the surface of the particles.

The process of the present invention may be used for the treatment of natural or synthetic micaceous iron oxide, as well as for the treatment of other lamellar or flaky pigments or extenders.

The present invention also includes within its scope a corrosion inhibiting paint composition which comprises at least one flaky or lamellar pigment or extender the corrosion inhibiting properties of which have been improved by the formation of a zinc phosphate coating on the surface of the particles thereof by the steps of

a) coating the particles of the material with zinc oxide or zinc hydroxide by contacting the material with a solution of a zinc salt in sodium or potassium hydroxide, the solution having a pH of 11 or above, at a temperature in the range of from 50° to 100°C, whereby a deposit of zinc oxide or zinc hydroxide is formed on the surface of the particles; and

b) converting the zinc oxide or zinc hydroxide to zinc phosphate by treatment of the zinc oxide or zinc hydroxide coated material with an acidic phosphate solution.

The present invention will be further described with reference to the following non-limiting Example:

## Example 1

6g of LAMINOX-F were stirred with 150ml of a solution of 1M sodium hydroxide containing 2g of zinc phosphate tetrahydrate (pH about 13) for 30 minutes at 75°C, after which time a zinc oxide coating was formed on the particles. The product was filtered, washed and dried at 100°C, and stirred for 10 minutes with a solution containing 2.5g of sodium dihydrogen phosphate in 100ml of water at ambient temperature, after which time the zinc oxide layer was converted at least partially to zinc phosphate tetrahydrate. The product was washed, and dried at 150°C, converting the zinc phosphate tetrahydrate into zinc phosphate dihydrate.

## Example 2

36g of LAMINOX-F coated with iron phosphate (10% by weight) was heated for 1 hour at 75°C in 900 cm$^3$ of 1 M sodium hydroxide containing 12g of dissolved zinc phosphate tetrahydrate and then washed by decantation with water. The wet material was suspended in 300 ml of water and the pH (initially 11) was adjusted to 9 with 100ml sodium dihydrogen phosphate solution (1.6g of the dihydrate per 100ml). The mixture was washed by decantation and dried at 120°C to yield 35.6g of LAMINOX-F coated with a mixture of zinc oxide and zinc phosphate tetrahydrate. (The apparent weight loss of the final product is due to dissolution of iron phosphate from the starting material).

## Example 3

504.0g of sodium hydroxide were dissolved in 12.6dm$^3$ of water and 168.0g of zinc phosphate tetrahydrate were added with stirring. After 30 minutes, the zinc phosphate had dissolved and 2kg of pre-phosphated Laminox F (10% iron phosphate) were added and the suspension was heated to 75°C and maintained at that temperature for 2 hours. The suspension was allowed to settle. The settled product was washed by decantation and then by vacuum filtration. It was found that a brownish-red, very fine precipitate was produced on diluting the coating solution, due to re-precipitation of dissolved iron phosphate. This was largely removed in the washing process.

The product from the first stage was micaceous iron oxide coated (after drying at 120°C) with zinc oxide (3.4%). In a separate experiment, the undried product was treated with an acidic zinc phosphate solution (at room temperature) in the following way.

115g of basic zinc carbonate (equivalent 68% ZnO) were dissolved in 4.6dm$^3$ of water containing 161cm$^3$ $H_3PO_4$ and the coated micaceous iron oxide from the first stage was added with sitrring. After 1/2 hour, the mixture was vacuum-filtered, washed and dried at 120°C overnight, to give micaceous iron oxide coated with 8% zinc orthophosphate dihydrate.

## Claims

1. A method for the treatment of a lamellar or flaky pigment or extender which comprises forming a zinc phosphate coating on the surface of the particles of the material by the steps of coating the particles of the material with zinc oxide or zinc hydroxide and converting the zinc oxide or zinc hydroxide to zinc phosphate by treatment of the zinc oxide or zinc hydroxide coated material with an acidic phosphate solution, or phosphoric acid, characterised in that the zinc oxide or zinc hydroxide is formed by contacting the material with a solution of a zinc salt in sodium or potassium hydroxide, the solution having a pH of 11 or above, at a temperature in the range of from 50° to 100°C, whereby a deposit of zinc oxide or zinc hydroxide is formed on the surface of the particles.

2. A method as claimed in claim 1 wherein the zinc salt is zinc phosphate, zinc carbonate or zinc sulphate.

3. A method as claimed in claim 1 or claim 2 wherein the alkaline solution of the zinc salt is contacted at ambient temperature with the particles of the material and the temperature raised to 50° to 100°C.

4. A method as claimed in any one of the preceding claims wherein the zinc oxide or zinc hydroxide is converted to zinc phosphate by treatment of the zinc oxide or zinc hydroxide coated material with an alkali metal dihydrogen phosphate solution having a pH of above 3.

5. A method as claimed in any one of the preceding claims wherein the reaction in step (b) is effected by stirring the zinc oxide or zinc hydroxide coated material with the acidic phosphate solution.

6. A method as claimed in any one of claims 1 to 4 wherein the reaction in step (b) is effected by slurrying the zinc oxide or zinc hydroxide coated material in water and adding the acidic phosphate solution dropwise thereto until the pH reaches 7.

7. A method as claimed in any one of the preceding claims wherein the surface of the particles of the material are pretreated prior to step (a) to form iron phosphate on the surface thereof.

8. A method as claimed in claim 7 wherein the pretreatment is carried out by heating a slurry of the material in 0.5 to 2% phosphoric acid.

9. A method as claimed in any one of the preceding claims wherein the material which is treated is natural or synthetic micaceous iron oxide.

10. A corrosion inhibiting paint composition which comprises at least one flaky or lamellar pigment or extender the corrosion inhibiting properties of which have been improved by the formation of an zinc phosphate coating on the surface of the particles thereof by a method as claimed in claim 1.

11. A corrosion inhibiting paint composition as claimed in claim 10 wherein the material has been treated by a method as claimed in any one of claims 2 to 9.